# EUROPEAN PATENT APPLICATION

(11) **EP 2 151 798 A1**
(43) Date of publication of application: **10.02.2010**
(21) Application number: 08104949.6
(22) Date of filing: 01.08.2008
(51) Int. Cl.: G06Q 30/00

(54) **A method for data request and collection**

(71) Applicant: Fonoklik Iletisim Hizmetleri ve Ticaret Anonim Sirketi, 34398 Istanbul (TR)
(72) Inventor: Yurekli, Ahmet, Istanbul (TR)
(74) Representative: Dericioglu, Ekin

(57) **Abstract**

The present invention relates to a method for requesting and collecting alphanumeric data from individuals using mobile devices. The data request is made using a separate communication channel or method than the one later used to receive the requested data provided by the individual. The individual who consents to this request, initiates a data session on the mobile device using a data connection in a session different from the one used to deliver the information and request message, and a universal resource locator with a unique identifier initially generated and pushed from the requestor, associating this session with the request made in the request session. A data form is transmitted to the mobile device during this session and filled in by the recipient and thus the method obtains the consent to provide the data and the data itself in separate sessions on different communication methods and completes the data request and collection.

## Description

### Field of the Invention

The present invention relates to a method for requesting and collecting alphanumeric data from individuals using mobile devices such as authorization orders, answers to survey questions, personal contact information including email addresses, or any other type of information that can be requested from an individual in text form, using mobile communication devices with digital data reception and transmission capability, such as mobile telephones.

### Background of the Invention

Mobile devices are a powerful channel for individuals to interact with businesses, using either voice, short message service (SMS), or mobile internet services. Businesses use these devices for various data collection services. While these devices have been widely used for collecting data from individuals, for certain types of data, especially those containing alphanumeric strings with special characters, requiring compliance checks, and especially when the individual needs to be convinced to provide the data and the request is initiated by the data collector in an unsolicited manner, the present methods have not provided sufficient efficiency.

A data request and collection task typically involves the following steps:
1. **Data request:** The individual is notified of a request for data. For instance, a telecommunications service provider may send an SMS to its subscriber, asking if she wants to join a certain subscription plan. This is a request for data (the data being the subscriber's identity and her preference to join the proposed subscription plan or not). The subscriber may or may not prefer to respond to this.
2. **The authentication of the requester:** Individuals may want to make sure a certain request for data is actually coming from an authentic source. Since most responses to data collection requests entail a financial transaction or parting with otherwise unavailable private data, individuals may be unwilling to respond to such a request when the identity of the requester is not verifiable. Since caller ID of voice calls are susceptible to forgery, and most people may not readily recognize an SMS sender address as belonging to a particular legitimate company, this constitutes a problem, and is a major reason for unanswered data requests.
**3. The authentication of the respondent:** Should the individual agree and respond to the data request, the respondent's identity must also be checked. Asynchronous request and response messages as in the case of requesting data by SMS and responding to it with another SMS in the other direction are also problematic. Most such requests are made with bulk messages sent over a short period of time. It is therefore not very difficult to estimate when a specific mobile device will receive such a request, and transmit a fraudulent response to the requester from another source using the forged terminal identifier of the individual to whom the original request was made.
4. **Entering and transmitting data to the requester:** Any data entry task on a mobile device must take into account the limitations of such a device. While some responses that require a simple choice from a menu may be entered during an automated voice call, those that require textual entry will require the use of the keyboard on the device, and need to be transmitted with a data connection. SMS is widely used to transmit such text responses, but pose some additional problems. Most notably, because of the asynchronous and sessionless nature of SMS interactions, and the limitations of mobile terminals, users of such terminals may not view the request and their response to it on the same screen. They must first read the request message and understand the instructions, then close that message, create a new response message in the correct format, and transmit it. The validity of the response cannot be checked until it is received at the other end. This method is also unsuitable for some data entry tasks involving strict format requirements and special characters, as in the case of a request for the individual's email address, which may be difficult to enter in an SMS.
5. **Privacy of communication:** The data transmitted from the user's terminal to the data collector must remain safe during and after that transmission. Since most mobile networks employ encrypted transmission methods, the biggest security threat is not in the network, but in the user's terminal device. Most mobile devices save a copy of the sent messages in the device, which may be read by anyone who gets access to this device at a later time. This makes SMS an unsuitable carrier for sensitive information.

To date, various data request and collection methods have been devised to make use of mobile networks and terminal devices. However, these are susceptible to one or more of the above problems. For example:
If information is requested by SMS: Data request may not be clearly explained within the format constraints of an SMS. The requester may not be reliably authenticated. The request and response sessions may not be reliably related with a unique identifier, leading to possible fraud or accidental mismatch of requests and responses.
If information is requested by binary SMS containing a universal resource locator link: Message format limitations may not permit sufficient explanatory information for the request, leading to low response rate.
If response is sent by SMS: The respondent may not be reliably authenticated. Some data types may be difficult to enter. The contents of the response SMS may be stored in the mobile terminal, leading to security hazards.

US 2006/0230154 Al describes a method of delivering information to a mobile device. However, this method, as well as other methods referenced in that document assume that either the purpose of the communication is to deliver content to the subscriber, and not to collect data from the subscriber, or that the subscriber is already informed about and willing to respond to the push message, and needs no prior steps to be convinced to do so, which is usually not the case in unsolicited requests for data. It also does not provide a method to link this push session with a previous communication, like a voice call.

### Brief Description of the Invention

The object of the present invention is to realize a method for requesting data from individuals and collecting their responses, using mobile devices.

Another object of the present invention is to realize a method for data request and collection by using a combination of voice, binary SMS, and mobile web channels.

### Detailed Description of the Invention

The method for data request and collection realized to fulfill the object of the present invention is illustrated in the accompanying drawing, in which:

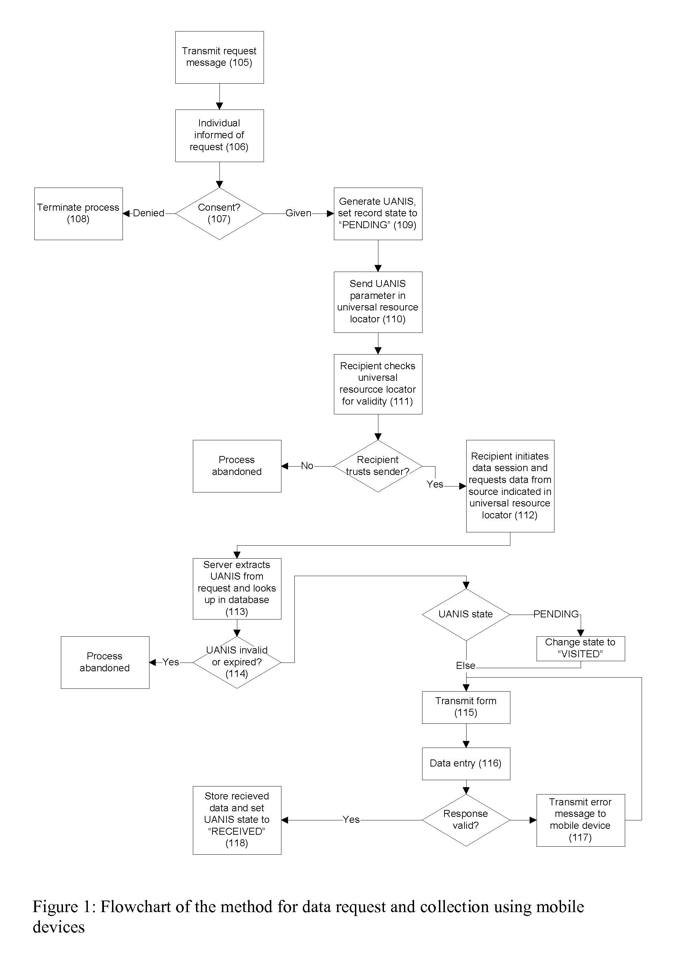

Figure 1 is the flowchart of the method for data request and collection.

The method for requesting and collecting alphanumeric data from individuals using mobile devices comprising the steps of:
**105.** A communication channel (such as an automated voice call, an SMS message, a binary SMS message, or any other message delivery channel supported by the individual's mobile device) being utilized to deliver a request message,
**106.** The individual receiving this message containing the data request, the purpose, conditions of use, and other information necessary to convince the user to provide the requested information,
**107.** The individual indicating consent to provide the requested information by responding to this message using the same channel through the same mobile device (for instance, pressing a key corresponding to an item in a voice menu during a voice call, or sending a response SMS in reply to request received by SMS, etc),
**108.** In the case of the individual not granting consent to provide the information within a predetermined time, the termination of the process; or in the case of the individual agreeing to provide the requested information, the process continuing,
**109.** A unique alphanumeric identifier string (UANIS) being generated by a computational method and being recorded in a database along with the timestamp of the acceptance of the individual, the identity and network device address (such as the Mobile Station International Subscriber Directory Number of the device used by the individual in responding to the request, and setting the status of the request to "PENDING"
**110.** A universal resource locator pointing to a server capable of serving electronic data forms over the digital network , and including a parameter that contains the UANIS generated in step 109 being generated and transmitted to the user's mobile device using a binary data carrier,
   The individual's mobile device receiving this message, and displaying the universal resource locator and prompting the individual to proceed,
**111.** The individual inspecting the universal resource locator to check if it matches the known internet domain name of the data collector identified in the request message in step 106,
**112.** The individual entering the command to establish a data connection to the network resource described by the universal resource locator,
   The device initiating a mobile browser session and requesting data from the resource indicated in the universal resource locator in the binary carrier, with the UANIS parameter in that message,
**113.** The server identifying the UANIS of the universal resource locator request transmitted to it, and searching this UANIS from its database,
**114.** If this UANIS is found in the database and its age as determined by mathematically computing the time difference between the present time and the timestamp value recorded during the call in step 109 not being above a predetermined value, proceeding with the process; otherwise terminating the process,
**115.** a. If the state value for this UANIS record in the database is PENDING, changing its state to VISITED and transmitting a form that can be rendered by the browser of the mobile device and used to enter the requested data, or
   b. If the state value for this UANIS record in the database is VISITED, transmitting a form that can be rendered by the browser of the mobile device and used to enter the requested data, or
   c. If the state value for this UANIS record in the database is RESPONDED, transmitting a form that can be rendered by the browser of the mobile device and used to enter the requested data,
**116.** The individual entering the requested information into this form on the mobile device's browser and transmitting it to the server by using a data connection,
**117.** The server comparing this response with validity rules previously determined and returning an error message if problems are detecting and going back to step 115),
**118.** Otherwise updating the associated database record identified by the UANIS value so that its state is set to the value "RECEIVED" and the information entered by this user is appended or otherwise stored in relation to that record.

The method eliminates problems associated with data request and collection using mobile devices with SMS messages only, WAP Push messages only, voice calls only, and other combinations of these.

The present invention allows the data collector to clearly explain the purpose and conditions of the data request, as well as provide clear instructions for the whole process, and obtain the individual's consent before proceeding with the rest of the process, by utilizing a communication channel suitable for providing such information (For example, a bank using an automated voice call to explain why they need the customer's email address, and requesting consent to send statements by email, in order to save paper, prior to initiating a WAP-push session and actually collecting data in text form).

The present invention also allows the individual receiving the request to then check the identity of the party that will receive any information she may provide, by checking the universal resource locator on the display unit of the mobile device (For example, in the case of the bank requesting the email address of the customer by automated voice call, but the customer responding by entering the data into the form rendered in the browser of the mobile device, the customer checking the universal resource locator to make sure the email address is being given to the intended recipient, which would not be possible if this information was provided in the initial incoming phone call).

The present invention also allows the data collector to check the respondent's identity by matching the UANIS in the response with the UANIS generated and associated with a particular user in the database.

The present invention also allows the individual to enter complex data including email addresses and passwords, with clear instructions and any error messages available during this process.

The present invention eliminates the risk of data being retained in the terminal device, allowing sensitive information to be securely collected. (For example, in the case of a bank requesting an individual's email address by SMS, and the user responding with another SMS message containing her email address, this information being stored on "sent messages" memory of the mobile device, causing a potential loss of privacy in the case of the loss of the mobile device, whereas in the case of the individual responding to this SMS request by filling in a form which is transmitted to the server with no trace being left on the mobile device, eliminating the privacy risk)

## Claims

1. A method for requesting and collecting data from an individual **characterized by** the steps of;
- A communication channel being utilized to deliver a request message (105),
- The individual receiving this message containing the data request, the purpose, conditions of use, and other information necessary to convince the user to provide the requested information (106),
- The individual indicating consent to provide the requested information by responding to this message using the same channel through the same mobile device this message (107),
- In the case of the individual not granting consent to provide the information within a predetermined time, the termination of the process (108); or in the case of the individual agreeing to provide the requested information, the process continuing,
- A unique alphanumeric identifier string (UANIS) being generated by a computational method and being recorded in a database along with the timestamp of the acceptance of the individual, the identity and network device address, and setting the status of the request to "PENDING" (109)
- A universal resource locator pointing to a server capable of serving data using hypertext transfer protocol , and including a parameter that contains the UANIS generated in step 109 being generated and transmitted to the user's mobile device using a binary data carrier (110),
The individual's mobile device receiving this message, and displaying the universal resource locator and prompting the individual to proceed,
- The individual inspecting the universal resource locator to check if it matches the known internet domain name of the data collector identified in the request message in step 106 (111),
- The individual entering the command to establish a data connection to the network resource described by the universal resource locator(112),
The device initiating a mobile browser session and requesting data from the resource indicated in the universal resource locator in the binary carrier, with the UANIS parameter in that message,
- The server identifying the UANIS of the universal resource locator request transmitted to it, and searching this UANIS from its database (113),
- If this UANIS is found in the database and its age as determined by mathematically computing the time difference between the present time and the timestamp value recorded during the call in step 109 not being above a predetermined value, proceeding with the process; otherwise terminating the process (114),
a. If the state value for this UANIS record in the database is PENDING, changing its state to VISITED and transmitting a form that can be rendered by the browser of the mobile device and used to enter the requested data, or
b. If the state value for this UANIS record in the database is VISITED, transmitting a form that can be rendered by the browser of the mobile device and used to enter the requested data, or
c. If the state value for this UANIS record in the database is RESPONDED, transmitting a form that can be rendered by the browser of the mobile device and used to enter the requested data(115),
- The individual entering the requested information into this form on the mobile device's browser and transmitting it to the server by using a data connection(116),
- The server comparing this response with validity rules previously determined and returning an error message if problems are detecting and going back to step 115 (117),
- Otherwise updating the associated database record identified by the UANIS value so that its state is set to the value "RECEIVED" and the information entered by this user is appended or otherwise stored in relation to that record (118).

2. A method for requesting and collecting data from an individual according to Claim 1 where the communication channel for informng and requesing consent of the individual is an automated voice call.

3. A method for requesting and collecting data from an individual according to Claim 1 where the communication channel for informing and requesting consent of the individual is an SMS message.

4. A method for requesting and collecting data from an individual according to Claim 1 where the communication channel for informing and requesting consent of the individual is a binary SMS message.

5. A method to collect email addresses, other contact information or other alphanumeric information from individuals using methods described in the above claims.

6. A method to collect authorizations or instructions for financial or non-financial transactions from individuals using methods described in the above claims.
